# EUROPEAN PATENT SPECIFICATION

(11) **EP 3 395 139 B1**
(45) Date of publication and mention of the grant of the patent: **23.09.2020**
(21) Application number: 18000376.6
(22) Date of filing: 17.04.2018
(51) Int. Cl.: A01B 69/04, G05D 1/02

(54) **AUTOMATIC STEERING SYSTEM**
AUTOMATISCHES LENKSYSTEM
SYSTÈME DE DIRECTION AUTOMATIQUE

(30) Priority: 26.04.2017 JP 2017087348
(43) Date of publication of application: 31.10.2018
(73) Proprietor: Kubota Corporation, Osaka 556-8601 (JP)
(72) Inventor: Shinkai, Atsushi, Osaka, 5900823 (JP); Sakaguchi, Kazuo, Hyogo, 6618567 (JP); Yamaguchi, Kotaro, Hyogo, 6618567 (JP); Suga, Hiroki, Osaka, 5900823 (JP)
(74) Representative: Müller-Boré & Partner Patentanwälte PartG mbB

(56) References cited:
- US-A1- 2012 296 529
- US-A1- 2016 313 735
- LARSEN W E ET AL: "Precision navigation with GPS", COMPUTERS AND ELECTRONICS IN AGRICULTURE, ELSEVIER, AMSTERDAM, NL, vol. 11, no. 1, 1 October 1994 (1994-10-01), pages 85-95, XP026648363, ISSN: 0168-1699, DOI: 10.1016/0168-1699(94)90054-X [retrieved on 1994-10-01]

## Description

### [Technical Field]

The present invention relates to an automatic steering system for a vehicle having a current position detecting function, the automatic steering system being configured to cause the vehicle to transfer from a previous route to a subsequent route by turn travel.

### [Background Art]

JP 2002-358122 A discloses an agricultural work vehicle including a global positioning system (GPS) receiver that receives radio waves from a GPS satellite. The agricultural work vehicle automatically travels farmland so that a midpoint between front wheels follows a target route, based on a current position calculated. The agricultural work vehicle performs automatic straight-forward travel control for travel along a straight target route and automatic turn control for travel along a curved target route. In the automatic turn control, a location deviation and a bearing deviation are calculated with respect to a tangent vector drawn from a point at which a straight line extending from the center of a turning circle as a target route to the midpoint between the front wheels intersects with the turning circle. The agricultural work vehicle is subjected to steering based on a command value for a hydraulic steering valve, the command value being calculated from the location deviation and bearing deviation calculated. The agricultural work vehicle thus performs automatic turn travel along a curved target route being the turning circle. In the farmland, the agricultural work vehicle frequently performs work and travel through a transfer from one straight target route to another straight target route via a 180- or 90-degree angle curved target route.

In the U.S. patent application publication US 2016/313735 A1, a drivable path plan system and method are described. The drivable path plan is calculated for an autonomous vehicle between a first path element and a second path element using a clothoide spline.

### [Summary of Invention]

### [Technical Problem]

The agricultural work vehicle disclosed in JP 2002-358122 A automatically travels on two straight target routes extending in parallel and leading to a curved target route. However, a considerable distance between the two straight target routes leading to the curved target route may enlarge a radius of a turning circle between end points of the two straight target routes. This may result in an increase of an area required for the agricultural work vehicle to perform turn travel for a transfer from the one straight target route to the other straight target route. In actual work, the agricultural work vehicle frequently travels on two straight target routes connected to each other with one or more straight target routes in between. Such a situation may demand that an automatic steering system performs turn control on a vehicle to cause the vehicle to efficiently transfer from one straight target route to another straight target route, the straight target routes being distant from each other.

### [Solutions to Problem]

According to an aspect, an automatic steering system for a vehicle having a current position detecting function is provided. The automatic steering system is configured to cause the vehicle to transfer from a previous route to a subsequent route by turn travel. The automatic steering system includes a first steering control module, a second steering control module, a third steering control module, a virtual turning circle calculation module, and a tangent calculation module. The first steering control module performs steering control for first turn travel on the vehicle to cause the vehicle to leave the previous route and head for the subsequent route. The second steering control module performs steering control for second turn travel on the vehicle to cause the vehicle to enter the subsequent route. The third steering control module performs steering control for shift travel on the vehicle to cause the vehicle to shift from the first turn travel to the second turn travel. The virtual turning circle calculation module calculates a virtual turning circle to be used as a target route for the second turn travel. The tangent calculation module calculates, as a target route for the shift travel, a tangent extending from a vehicle body reference point in the first turn travel to the virtual turning circle.

In various embodiments and examples as described herein, the term "previous route" may be understood as a route on which the vehicle is currently running.

With this configuration, the virtual turning circle may be used as a target route via which the vehicle finally enters the subsequent route being a destination. In addition, the first turn travel corresponding to a turn for leaving the previous route being a source may be performed at any turning radius allowed by the vehicle. The shift travel shifting from the first turn travel to the second turn travel may be travel to a straight forward direction since the target route is the tangent extending from the vehicle body reference point in the first turn travel to the virtual turning circle. The steering control for the shift travel may therefore be easy to perform. In addition, the virtual turning circle may be an ideal turning circle along which the vehicle enters the subsequent route. The automatic steering system thus can perform turn control on the vehicle to cause the vehicle to efficiently transfer from one straight target route to another straight target route, the straight target routes being distant from each other.

According to the invention, the tangent calculation module may set the tangent calculated, at a reference tangent when an angle between the tangent and a traveling direction of the vehicle is within a first predetermined angle, and the third steering control module may perform the steering control with the reference tangent set at the target route for the shift travel. In various embodiments and examples as described herein, the first predetermined angle may be a specified angle which is predetermined or predeterminable. With this configuration, in the first turn travel, when an amount of misalignment between a traveling direction and an orientation of a tangent drawn from a current position to a virtual turning circle is reduced, the tangent may be regarded as a reference tangent. The reference tangent may be set at the target route for the shift travel. This may result in a smooth shift from the first turn travel to the shift travel and a smooth shift from the shift travel to the second turn travel.

The use of the virtual turning circle as a target route may make calculation for steering control complicated. According to a preferred example of the present disclosure, therefore, the virtual turning circle calculation module may define, as route line segments, chords obtained by dividing the virtual turning circle into a plurality of arcs, and the second steering control module may perform the steering control while successively selecting the route line segments as the target route for the second turn travel. With this configuration, the target route for the second turn travel may be straight. This configuration may therefore simplify calculation for the steering control and achieves commonality of steering control between the second turn travel and straight-forward travel.

According to a preferred example of the present disclosure, steering control with the subsequent route set at a target route may be performed when an angle between a traveling direction of the vehicle and the subsequent route is within a second predetermined angle and a distance between the vehicle body reference point and the subsequent route is equal to or less than a predetermined distance. In various embodiments and examples as described herein, the second predetermined angle may be a specified angle which is predetermined or predeterminable. Further, in various embodiments and examples as described herein, the predetermined distance may be a specified distance which is predetermined or predeterminable. With this configuration, the vehicle may perform the second turn travel with line segments successively extracted from a group of line segments (preferably, for example, chords with a central angle ranging from 20° to 45°) obtained from a virtual turning circle, the line segments being set at a target route for the second turn travel. When deviations in distance and direction between the vehicle and the subsequent route are reduced, the subsequent route line segment may be set at a target route for a transfer to the subsequent route. This may result in a smooth shift from the second turn travel to travel on the subsequent route.

As described above, the first turn travel corresponding to the turn for leaving the previous route being a source may be performed at any turning radius allowed by the vehicle. Preferably, the first turn travel is performed at a minimum turning radius of the vehicle. This configuration may be advantageous since a traveling distance in the first turn travel becomes short.

When a distance between the previous route and the subsequent route becomes short and a length of the reference tangent falls below a preset lower limit value, the vehicle may enable a direct shift from the first turn travel to the second turn travel and have no necessity of the shift travel. According to a preferred example of the present disclosure, therefore, the vehicle directly may shift from the first turn travel to the second turn travel without being subjected to the steering control by the third steering control module when a length of a first tangent calculated by the tangent calculation module falls below a lower limit value.

When the ground on which the vehicle travels has irregularities or is muddy, an unexpected vehicle movement such as a lateral slip may occur, which may cause a considerable deviation of a position of the vehicle from a target route. In such a case, it may be difficult to return the position of the vehicle to the target route in a short time only by forward travel of the vehicle. Particularly, an agricultural work vehicle such as a tractor or a combined harvester and thresher may be required to halt work at an end position of a previous route and immediately resume the work at a start position of a subsequent route. For this requirement, the vehicle may need to reliably enter the subsequent route at a correct position. Accordingly, if the position of the vehicle significantly deviates from a target route before entering the subsequent route, the positional deviation may be preferably resolved by backward travel (e.g., turn travel in reverse). According to a preferred example of the present disclosure, when the vehicle deviates from the subsequent route or an extension from the subsequent route beyond a limit value at termination of the second turn travel, the vehicle may be put into reverse to perform approach travel approaching the subsequent route and may be subjected to the steering control for the second turn travel again.

According to another aspect, a vehicle is provided, which comprises the automatic steering system according to any one of the above-stated aspect and various examples.

According to yet another aspect, an automatic steering method according to claim 8 is provided for a vehicle having a current position detecting function. The method causes the vehicle to transfer from a previous route to a subsequent route by turn travel. The method comprises:
performing, by a first steering control module, steering control for first turn travel on the vehicle to cause the vehicle to leave the previous route and head for the subsequent route;
calculating, by a virtual turning circle calculation module, a virtual turning circle to be used as a target route for second turn travel on the vehicle to cause the vehicle to enter the subsequent route;
calculating, by a tangent calculation module, a tangent extending from a vehicle body reference point in the first turn travel to the virtual turning circle as a target route for shift travel on the vehicle to cause the vehicle to shift from the first turn travel to second turn travel;
performing, by a third steering control module, steering control for the shift travel; and
performing, by a second steering control module, steering control for the second turn travel.
It is noted that the steps of the method according to the above-stated aspect may be performed in the order as stated above or in an order different from that as stated above. For example, the step of calculating the virtual turning circle may be performed before the step of performing steering control for the first turn travel. Further, for example, the step of performing steering control for the first turn travel and the step of calculating the tangent extending from the vehicle body reference point in the first turn travel to the virtual turning circle may be performed in parallel.

According to yet another aspect, a computer program product is provided. The computer program product comprises computer-readable instructions that, when loaded and run on a computer connected to a vehicle, cause the computer to perform the method according to the above-stated aspect.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. Further subject matter described in the application can be implemented using various machines.

### [Brief Description of Drawings]

Details of one or more implementations are set forth in the exemplary drawings and description below. Other features will be apparent from the description, the drawings, and from the claims. It should be understood, however, that even though embodiments are separately described, single features of different embodiments may be combined to further embodiments.

Fig. 1 is a side view of an exemplary tractor equipped with an automatic steering system.
Fig. 2 is a schematic view of a part of an exemplary route on which the tractor subjected to automatic steering travels.
Fig. 3 is a schematic view of the tractor performing exemplary turn travel from a previous route to a subsequent route based on the automatic steering.
Fig. 4 is a functional block diagram of an exemplary control system for travel of the tractor subjected to the automatic steering.
Fig. 5 is a schematic view of the tractor shifting from exemplary first turn travel to exemplary shift travel.
Fig. 6 is a schematic view of the tractor shifting from the exemplary shift travel to exemplary second turn travel.
Fig. 7 is a schematic view of the tractor shifting from the exemplary second turn travel to exemplary straight-forward travel.
Fig. 8 is a flowchart of an exemplary and schematic flow of automatic steering control in turn travel.
Fig. 9 is a schematic view of exemplary backward turn travel.

### [Description of Embodiments]

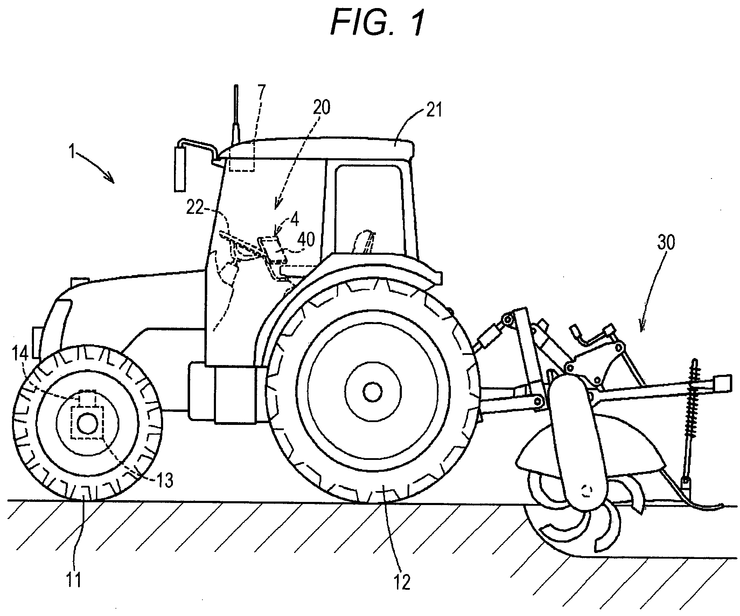

With reference to the drawings, next, a description will be given of an automatic steering system according to an embodiment of the present invention. Fig. 1 is a side view of a tractor being an example of a vehicle equipped with the automatic steering system. As illustrated in Fig. 1, in the tractor, a cab 20 may be disposed at a center of a vehicle body 1 supported by front wheels 11 and rear wheels 12. A cultivating device 30 of a rotary type being a work device may be mounted to the back side of the vehicle body 1 with a lifting mechanism of a hydraulic type. The front wheels 11 may serve as driving wheels, and a traveling direction of the tractor may be changed by changing a steering angle of the front wheels 11. The steering angle of the front wheels 11 may be changed by actuating a steering mechanism 13. The steering mechanism 13 may include a steering motor 14 for automatic steering. In manual travel, the front wheels 11 may be steered by operating a steering wheel 22 disposed in the cab 20. The tractor may include a cabin 21 that is provided with a satellite positioning module 7 as a positioning module to enable a current position detecting function. A satellite antenna that constitutes a part of the satellite positioning module 7 to receive a global navigation satellite system (GNSS) signal (including a global positioning system (GPS) signal) may be mounted on a ceiling region of the cabin 21. For complementation of satellite navigation, the satellite positioning module 7 may include an inertial navigation module including a gyro/acceleration sensor and a magnetic azimuth sensor. The inertial navigation module may be installed at a place different from a place where the satellite positioning module 7 is installed. In this embodiment, a data processing terminal 4 of a general-purpose type may be installed on the cab 20. The data processing terminal 4 may be a tablet computer including a touch panel 40. The data processing terminal 4 may receive input of various operations from a driver through the touch panel 40. In addition, the data processing terminal 4 may give various kinds of information to the driver through the touch panel 40.

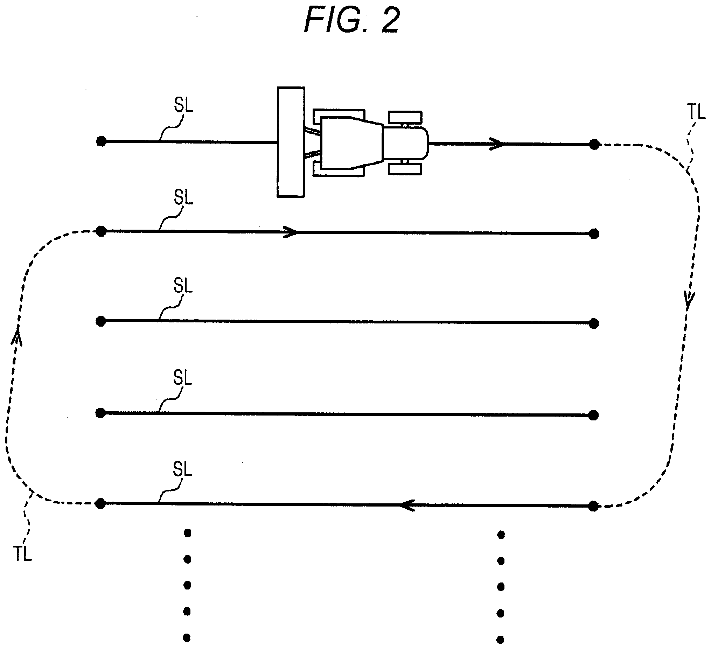

Fig. 2 is a schematic view of exemplary work and travel of the tractor subjected to automatic steering. The tractor may be subjected to automatic steering to repeatedly perform straight-forward travel and turn travel. The tractor may perform the straight-forward travel to travel along a straight route SL (see Fig. 2). The tractor may perform the turn travel to travel along a curved route TL (see Fig. 2) for a transfer from a first straight route to a second straight route. The turn travel may typically be performed such that one or more straight routes are sandwiched between the first straight line and the second straight line. In straight-forward travel, the tractor may lift down the cultivating device 30 to perform cultivating work. In turn travel, the tractor may lift up the cultivating device 30 to halt the cultivating work.

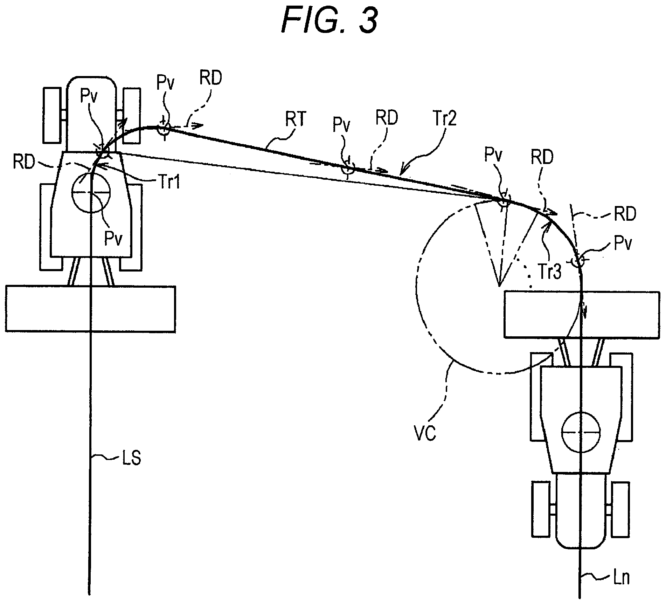

Fig. 3 is a schematic view of exemplary automatic steering in exemplary turn travel. In this example, the tractor performs turn travel for a transfer from a straight route Ls (e.g., a source) to a straight route Ln (e.g., a destination). As used herein, a straight route being a source is referred to as a previous route Ls, and a straight route being a destination is referred to as a subsequent route Ln.

The tractor may arrive at an end position of the previous route Ls and then perform first turn travel to head for the subsequent route Ln. The tractor may perform the first turn travel along a track Tr1. In addition, the tractor may calculate a virtual turning circle VC tangent to a start position of the subsequent route Ln or a position near the start position on an extension from the subsequent route Ln, on a side nearer to the previous route Ls. The tractor may also calculate a tangent extending from a vehicle body reference point Pv of the tractor performing the first turn travel to the virtual turning circle VC. The vehicle body reference point Pv may be substantially a central point of the tractor, but may be set at any position of the tractor. A traveling direction RD may correspond to an orientation of a line directed to a direction of the traveling tractor, through the vehicle body reference point Pv. In course of the performance of the first turn travel, when an angle between the tangent calculated and the traveling direction is within a first predetermined value (which may be a specified value that is predetermined or predeteminable), the tangent may be set at a reference tangent RT. After setting the reference tangent RT, the tractor may terminate the first turn travel and then perform shift travel along the reference tangent RT set at a target route. The tractor performs the shift travel along a track Tr2. In course of the performance of the shift travel, when the vehicle body reference point Pv of the tractor approaches the virtual turning circle VC, the tractor may terminate the shift travel and then perform second turn travel along the virtual turning circle VC. The tractor may perform the second turn travel along a track Tr3. In course of the performance of the second turn travel, when the vehicle body reference point Pv of the tractor approaches the start position of the subsequent route Ln or a position near the start position on the extension from the subsequent route Ln, the tractor may terminate the second turn travel and then perform straight-forward travel along the subsequent route Ln set at a target route.

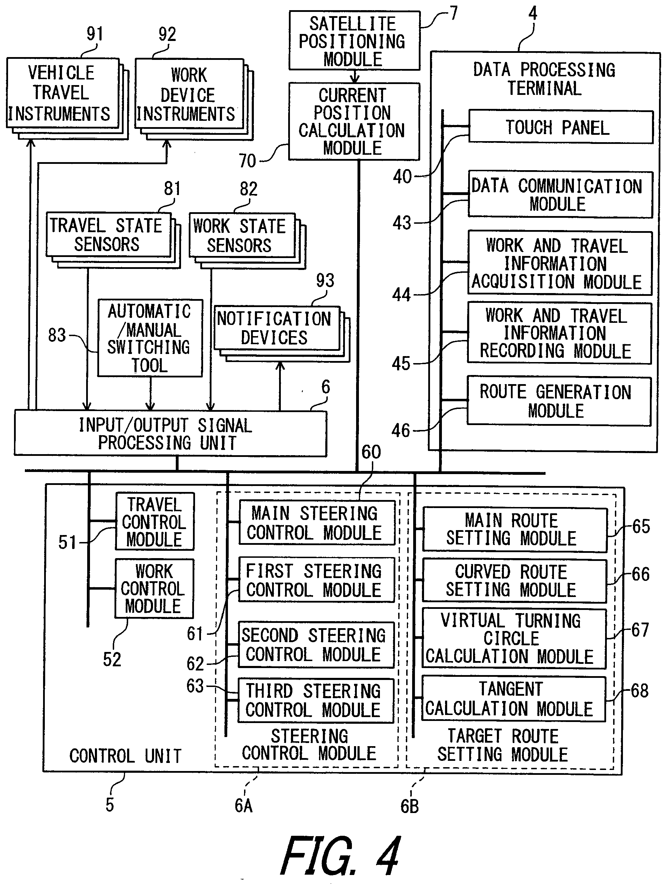

Next, a concrete and specific description will be given of the exemplary turn travel described above. Fig. 4 is a functional block diagram of an exemplary control system for automatic travel of the tractor. The control system may include the data processing terminal 4, a control unit 5, and an input/output signal processing unit 6. The data processing terminal 4, the control unit 5, and the input/output signal processing unit 6 may be connected to one another via an on-vehicle local area network (LAN) or a control signal line to enable data exchange. The data processing terminal 4 may be detached from the tractor and may be used at the outside of the tractor. In this case, data exchange between the control unit 5 and the data processing terminal 4 may be achieved by wireless communications.

The input/output signal processing unit 6 may serve as an input/output interface and have a function of establishing a connection with a data/signal line, an on-vehicle LAN, a wireless communication line, or a wired communication line. Vehicle travel instruments 91, work device instruments 92, notification devices 93, and the like may be connected to the data processing terminal 4 and the control unit 5 via the input/output signal processing unit 6. The input/output signal processing unit 6 may therefore have, for example, an output signal processing function, an input signal processing function, and a communication function for data transmission using a data/signal line, a wireless line, or a wired line. The vehicle travel instruments 91 may include, for example, the steering motor 14 of the steering mechanism 13, an engine control instrument, and a transmission instrument. The work device instruments 92 may include, for example, a power transmission clutch of the cultivating device 30 being a work device, and a lifting cylinder of the lifting mechanism. The notification devices 93 may include, for example, a meter, a buzzer, a lamp, and/or a liquid crystal display. In addition, switches and buttons, such as travel state sensors 81, work state sensors 82, and an automatic/manual switching tool 83, may be connected to the input/output signal processing unit 6.

A current position calculation module 70 may receive positioning data from the satellite positioning module 7, process the positioning data, and output a current position being a position on map coordinates or field coordinates at a predetermined portion of the tractor. The current position calculation module 70 may send the current position to each of the control unit 5 and the data processing terminal 4. In particular, the control unit 5 may perform automatic steering control based on the current position.

The data processing terminal 4 may include the touch panel 40, a data communication module 43, a work and travel information acquisition module 44, a work and travel information recording module 45, and/or a route generation module 46. The touch panel 40 may give various kinds of information to a user and receive input of operations from the user.

The work and travel information acquisition module 44 may acquire work and travel information including, for example, a map position and a topographic feature of a field being work land, and a kind of work to be performed on the field, from an external computer or a storage medium via the data communication module 43. The work and travel information recording module 45 may record the acquired work and travel information on a memory. The user may directly input the map position and topographic feature of the field and the kind of work to be performed on the field, using an information input assistant function to be executed through the touch panel 40.

The route generation module 46 may refer to field information including, for example, a topographic feature of a field where the vehicle will perform work, execute a route generation program that is installed in advance, and generate a route. The route generation module 46 may receive a route that is externally generated, via the data communication module 43 and control the received route.

The control unit 5 may include a travel control module 51, a work control module 52, a steering control module 6A, and/or a target route setting module 6B as basic control function modules that may cause the tractor to perform automatic work and travel.

The travel control module 51 may have a manual travel control mode and an automatic travel control mode. In the manual travel control mode, the travel control module 51 may transmit control signals to the vehicle travel instruments 91, based on operations of an accelerator pedal and a gear change lever by a driver. In the automatic travel control mode, the travel control module 51 may cause the tractor to travel at an engine speed and a vehicle speed each specified by automatic travel parameters. In addition, the travel control module 51 may output an operation control signal to the steering motor 14, based on a steering command calculated by the steering control module 6A. The steering control module 6A may calculate the steering command to cause the tractor to travel along a target route set by the target route setting module 6B. The automatic/manual switching tool 83 may switch between the manual travel control mode and the automatic travel control mode. Depending on a situation, such mode switching may automatically be made in accordance with a work and travel state of the tractor.

The work control module 52 may have an automatic work control mode and a manual work control mode. In the manual work control mode, the work control module 52 may transmit control signals to the work device instruments 92, based on operations of work operation tools by the driver. In the automatic work control mode, the work control module 52 may transmit signals to the work device instruments 92, based on automatic work parameters. The work device instruments 92 may keep an orientation of the cultivating device 30, based on the automatic work parameters, and lift up/down the cultivating device 30.

The steering control module 6A may generate a steering command for causing the tractor to follow a target route, based on a target route set by the target route setting module 6B, a current position sent from the current position calculation module 70, and a traveling direction calculated based on a successive current position. It may be assumed in the following description that the current position is at the same position as the vehicle body reference point Pv. Each of a main steering control module 60 of the steering control module 6A and a main route setting module 65 of the target route setting module 6B may be mainly used for straight-forward travel to cause the tractor to follow a straight target route (which may include a target route curved at a larger radius of curvature).

Particularly, in order to perform the automatic steering control to cause the tractor to transfer from the previous route Ls to the subsequent route Ln by the turn travel as described above with reference to Fig. 2, the steering control module 6A may further include a first steering control module 61, a second steering control module 62, and a third steering control module 63. Likewise, the target route setting module 6B may further include a curved route setting module 66, a virtual turning circle calculation module 67, and/or a tangent calculation module 68.

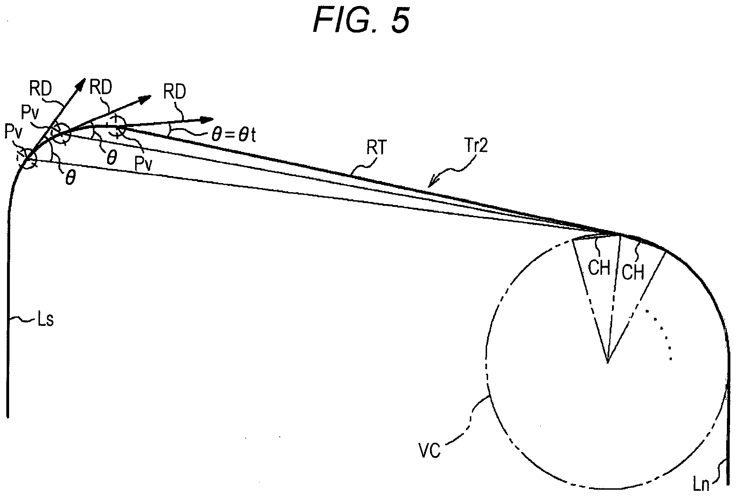

As illustrated in Fig. 5, when the tractor arrives at an end of the previous route Ls, the first steering control module 61 may perform steering control for first turn travel on the tractor to cause the tractor to leave the previous route Ls and head for the subsequent route Ln (see Fig. 3). The steering control for the first turn travel may employ a minimum turning radius of the tractor.

As illustrated in Figs. 3 and 5, when the tractor arrives at the previous route Ls, the virtual turning circle calculation module 67 may calculate a virtual turning circle VC to be used as a target route for second turn travel. The tractor may perform the second turn travel to enter the subsequent route Ln. The virtual turning circle VC may be tangent to the start position of the subsequent route Ln or the extension from the subsequent route Ln, on a side nearer to the previous route Ls, and may have a radius corresponding to the minimum turning radius of the tractor in this embodiment. In addition, the virtual turning circle calculation module 67 may divide the virtual turning circle VC calculated, into a plurality of arcs to obtain a route line segment extending between two ends of each arc. In this embodiment, as a specific example, the virtual turning circle VC is equally divided into 36 arcs each having a central angle of 10°, so that 36 chords, that is, 36 successively continuous route line segments CH are calculated. It is noted, however, that, in some examples, the segmentation of the virtual turning circle VC may be made in a manner different from this specific example.

In course of the performance of the first turn travel, the tangent calculation module 68 may calculate a tangent extending from a vehicle body reference point Pv to the virtual turning circle VC at predetermined time intervals or predetermined traveling distance intervals (e.g. Fig. 5 illustrates three tangents), and may also calculate an angle θ (see Fig. 5) between each tangent and a steering direction (e.g., a traveling direction) of the tractor. The tangent calculation module 68 may set, at a reference tangent RT, a tangent at the time when the angle θ is within a first predetermined angle θt that may be set in advance, and may record the reference tangent RT. In this embodiment, as a specific example, the first predetermined angle θt is 30°. It is noted, however, that, in some examples, the first predetermined angle θt may be set to a value other than 30°.

When the reference tangent RT is calculated, the third steering control module 63 may be activated, and the steering control by the first steering control module 61 may be terminated. Since the reference tangent RT may be a straight line, the steering control by the third steering control module 63 may be substantially similar to steering control for such travel as to follow a straight target route. In this embodiment, the travel to follow the reference tangent RT is referred to as shift travel.

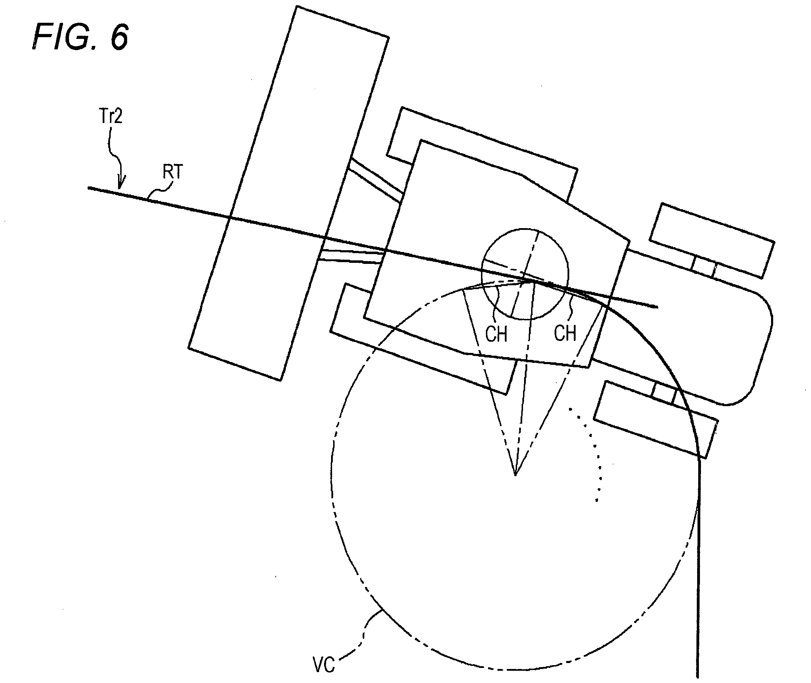

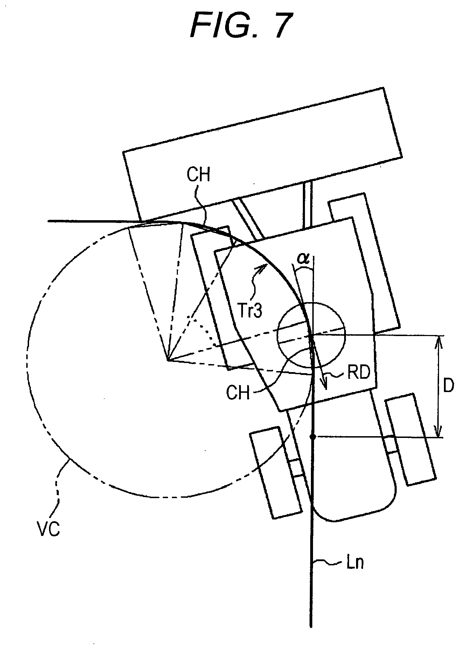

As illustrated in Figs. 3, 6, and 7, the second steering control module 62 may perform steering control for a shift from the straight shift travel to second turn travel for a transfer to the subsequent route Ln. The shift from the shift travel controlled by the third steering control module 63 to the second turn travel controlled by the second steering control module 62 may be made immediately before, for example, one second before the vehicle body reference point Pv reaches a point of tangency of the reference tangent RT. At this timing, the second steering control module 62 may select a nearest one of the route line segments CH and causes the tractor to perform the second turn travel. The tractor may thus follow the route line segment CH selected. The second steering control module 62 may successively select the route line segments CH and perform steering control to cause the tractor to follow each route line segment CH. The second steering control module 62 may substantially perform steering control on the tractor to cause the tractor to perform second turn travel along the virtual turning circle VC. At this time, the second steering control module 62 may perform speed reduction control according to a deviation from each route line segment CH. The second steering control module 62 may also perform speed reduction control according to a difference between a current steering angle and a target steering angle. In addition, the second steering control module 62 may calculate a distance D between the vehicle body reference point of the tractor and the subsequent route Ln, and an angle α between the traveling direction of the tractor and the subsequent route Ln (see Fig. 7).

The second turn travel controlled by the second steering control module 62 may be terminated on condition that as illustrated in Fig. 7, the angle α between the traveling direction of the tractor and the subsequent route Ln is within a second predetermined angle αt and the distance D between the vehicle body reference point of the tractor and the subsequent route Ln (which may include the extension from the subsequent route Ln) is equal to or less than a predetermined distance. In this embodiment, as a specific example, the second predetermined angle αt is 20°, and the distance D is several tens of centimeters. It is noted, however, that, in some examples, the second predetermined angle αt and the distance D may be set to values different from this specific example. When the conditions are satisfied, the second steering control module 62 may cause the tractor to terminate the second turn travel, and the main steering control module 60 (e.g. an additional control module) may cause the tractor to resume the straight-forward travel. The tractor may thus follow the subsequent route Ln set at a target route.

When the distance between the previous route Ls and the subsequent route Ln is short, the reference tangent RT becomes shorter, which may enable a direct shift from the first turn travel to the second turn travel. In this case, the substantial shift travel controlled by the third steering control module 63 may be omitted. Even in this case, however, a tangent may be calculated by the tangent calculation module 68 and an angle between the tangent and the traveling direction may also be calculated, for determining the timing of terminating the first turn travel.

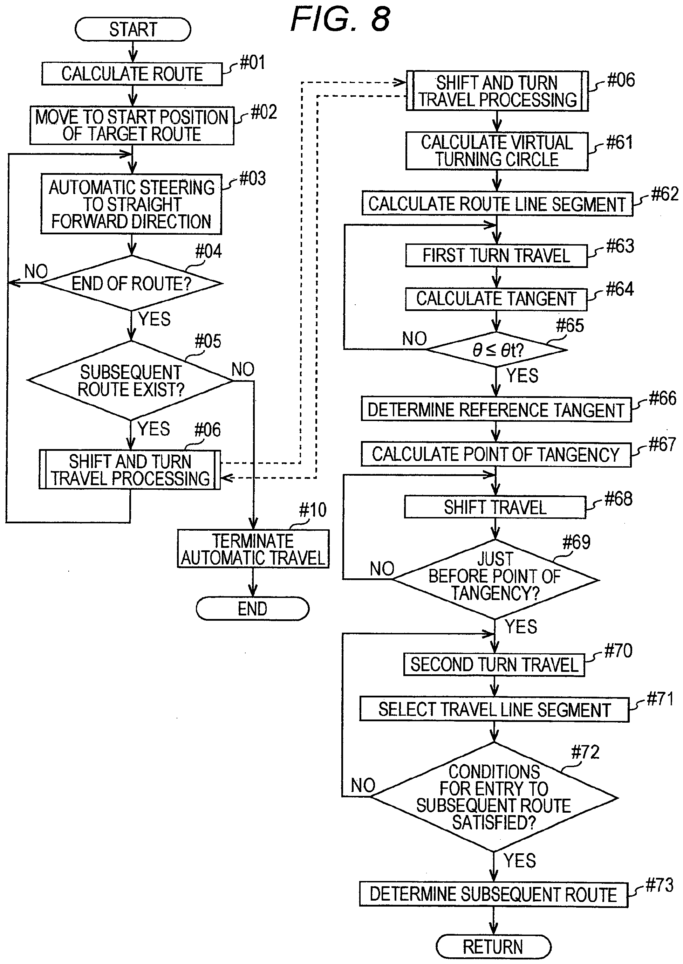

With reference to a flowchart of Fig. 8, next, a description will be given of a schematic flow of automatic steering control in turn travel using the steering control module 6A and the target route setting module 6B each configured as described above.

First, straight routes such as those illustrated in Fig. 2 may be calculated for a field where the tractor will perform work (#01). The tractor may be moved to a start position of a first target route selected (e.g., one of the straight routes calculated) (#02). Next, the tractor may start straight-forward travel by automatic steering to follow the target route (#03). When the tractor arrives at an end position of the target route (Yes in #04), a determination may be made as to whether there is a straight route on which the tractor will travel next (#05). When there is a straight route on which the tractor will travel next (Yes in #05), shift and turn travel processing may be performed on the tractor to cause the tractor to transfer to the next route by turn travel (#06). In the shift and turn travel processing, the straight route on which the tractor has traveled until now may correspond to a previous route Ls, and the straight route on which the tractor will travel next may correspond to a subsequent route Ln. When there is no straight route on which the tractor will travel next (No in #05), automatic travel in the field may be terminated (#10).

In the shift and turn travel processing, a virtual turning circle VC may be calculated (#61). Next, a route line segment CH may be calculated based on the calculated virtual turning circle VC (#62). The tractor may perform first turn travel at a minimum turning radius (#63). At the same time, a tangent extending from a vehicle body reference position to the virtual turning circle VC may be calculated (#64). A determination may be made as to whether an angle θ between the calculated tangent and a traveling direction of the tractor is within a first predetermined angle θt (#65). When the angle θ is not within the first predetermined angle θt (No in #65), the first turn travel may be continued (#63). When the angle θ is within the first predetermined angle θt (Yes in #65), a tangent at this time may be set at a reference tangent RT, and position data indicative of the tangent may be calculated (#66). In addition, position data indicative of a point of tangency of the tangent may be calculated (#67).

Next, the third steering control module 63 may cause the tractor to perform shift travel with the reference tangent RT set at a target route (#68). In the shift travel, when the vehicle body reference position of the tractor approaches just before the point of tangency of the reference tangent RT (Yes in #69), the tractor may terminate the shift travel and then perform second turn travel (#70). In the second turn travel, route line segments CH each of which will be set at a target route may be successively selected, and automatic steering may be performed on the tractor to cause the tractor to follow each selected route line segment CH (#71). In course of the performance of the second turn travel, when conditions for entry of the tractor to the subsequent route Ln (e.g., angle α: within a second predetermined angle αt, distance D: equal to or less than a predetermined distance) are satisfied (Yes in #72), a shift to steering control with the subsequent route Ln set at a target route may be determined (#73).

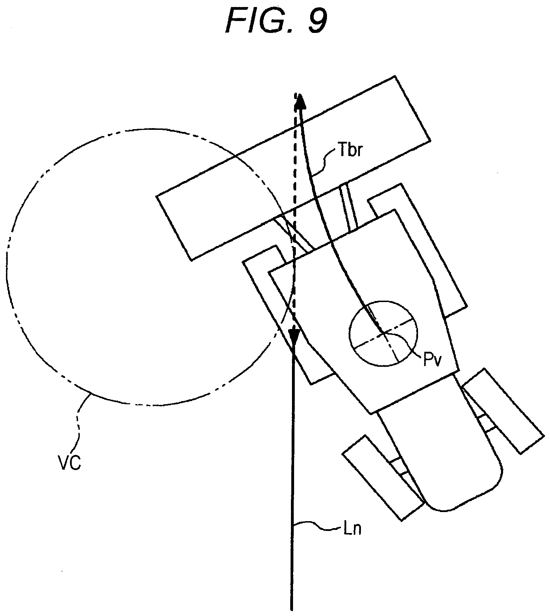

In the foregoing embodiment, the tractor deviating from a target route may recover the positional deviation by means of forward steering. In some cases, the tractor may require a recovery from a positional deviation by means of backward steering (in other words, travel in reverse). As illustrated in Fig. 9, when the direction and position of the tractor are deviated more than predetermined amounts and exceed preset limit values, respectively, before entry of the tractor to the subsequent route Ln in the second turn travel, the tractor may be put into reverse to perform approach travel. The tractor may thus approach, in reverse, a target route being the extension from the subsequent route Ln. In this embodiment, the tractor may perform backward turn travel. The tractor may perform the backward turn travel along a track Tbr illustrated in Fig. 9, for example. When the directional and positional deviations of the tractor are resolved by the backward turn travel, the tractor may perform the second turn travel again. However, if the directional and positional deviations are not resolved although the deviation recovery processing by the backward steering is performed predetermined times, for example, three times, the shift and turn travel processing may be halted.

### [Other Embodiments]

(1) In the foregoing embodiment, the control threshold values (e.g. condition values), such as the first and second predetermined angles set in advance by the target route setting module 6B, may be settable at any values. The control threshold values may be changed in the course of work or may be externally set. Alternatively, the control threshold values may be automatically set based on a combination of a kind of work with a state of work land. The kind of work and the state of the work land may be included in, for example, the work and travel information.
(2) The segmentation of the respective function modules in the functional block diagram of Fig. 4 is merely an example for convenience of the description. The various function modules may be freely integrated with one another or each function module may be freely divided into multiple function modules.
(3) In the foregoing embodiment, the tractor equipped with the cultivating device 30 being a work device is described as a work vehicle. The present invention is alternatively applicable to a tractor equipped with a work device different from the cultivating device 30 and is also applicable to a farm machine such as a combined harvester and thresher or a rice-planting machine, and a construction machine.

It should be noted that the configuration disclosed in the foregoing embodiment (including the other embodiments; the same applies hereinafter) may be applied in conjunction with the configurations disclosed in the other embodiments as long as no contradiction arises. The embodiments disclosed herein are merely illustrative. The present invention is not limited to the embodiments, and the embodiments may be appropriately modified without departing from the scope defined by the accompanying claims.

### [Industrial Applicability]

The present invention is applicable to automatic steering for a vehicle that transfers from a previous route to a subsequent route by turn travel.

### [Reference Signs List]

1: vehicle body
5: control unit
6A: steering control module
6B: target route setting module
7: satellite positioning module
60: main steering control module
61: first steering control module
62: second steering control module
63: third steering control module
65: main route setting module
66: curved route setting module
67: virtual turning circle calculation module
68: tangent calculation module
70: current position calculation module
CH: route line segment
Ln: subsequent route
Ls: previous route
Pv: vehicle body reference point
RT: reference tangent
VC: virtual turning circle

## Claims

1. An automatic steering system for an agricultural vehicle having a current position detecting function, the automatic steering system being configured to cause the vehicle to transfer from a previous route (Ls) to a subsequent route (Ln) by turn travel, the automatic steering system comprising:
a first steering control module (61) configured to perform steering control for first turn travel on the vehicle to cause the vehicle to leave the previous route (Ls) and head for the subsequent route (Ln);
a second steering control module (62) configured to perform steering control for second turn travel on the vehicle to cause the vehicle to enter the subsequent route (Ln);
a third steering control module (63) configured to perform steering control for shift travel on the vehicle to cause the vehicle to shift from the first turn travel to the second turn travel;
**characterised in that** the automatic steering system further comprises:
a virtual turning circle calculation module (67) configured to calculate a virtual turning circle (VC) to be used as a target route for the second turn travel; and
a tangent calculation module (68) configured to calculate, as a target route for the shift travel, a tangent extending from a vehicle body reference point (Pv) in the first turn travel to the virtual turning circle (VC), wherein
the tangent calculation module (68) is further configured to set the tangent calculated, at a reference tangent (RT) when an angle (θ) between the tangent and a traveling direction of the vehicle is within a first predetermined angle (θt), and
the third steering control module (63) is further configured to perform the steering control with the reference tangent (RT) set at the target route for the shift travel.

2. The automatic steering system according to claim 1, wherein
the virtual turning circle calculation module (67) is further configured to define, as route line segments (CH), chords obtained by dividing the virtual turning circle (VC) into a plurality of arcs, and
the second steering control module (62) is configured to perform the steering control while successively selecting the route line segments (CH) as the target route for the second turn travel.

3. The automatic steering system according to any one of claims 1 to 2, further comprising:
an additional steering control module (60) configured to perform steering control with the subsequent route set at a target route when an angle (α) between a traveling direction (RD) of the vehicle and the subsequent route (Ln) is within a second predetermined angle (αt) and a distance (D) between the vehicle body reference point (Pv) and the subsequent route (Ln) is equal to or less than a predetermined distance.

4. The automatic steering system according to any one of claims 1 to 3, wherein
the first steering control module (61) is further configured to perform the steering control for the first turn travel at a minimum turning radius of the vehicle.

5. The automatic steering system according to any one of claims 1 to 4, wherein
the automatic steering system is configured to control the vehicle to directly shift from the first turn travel to the second turn travel without being subjected to the steering control by the third steering control module (63) when a length of a first tangent calculated by the tangent calculation module (68) falls below a lower limit value.

6. The automatic steering system according to any one of claims 1 to 5, wherein
when the vehicle deviates from the subsequent route (Ln) or an extension from the subsequent route (Ln) beyond a limit value at termination of the second turn travel, the automatic steering system is configured to put the vehicle into reverse to perform approach travel approaching the subsequent route (Ln) and to subject the vehicle to the steering control for the second turn travel again.

7. An agricultural vehicle comprising the automatic steering system according to any one of claims 1 to 6.

8. An automatic steering method for an agricultural vehicle having a current position detecting function, the method causing the vehicle to transfer from a previous route (Ls) to a subsequent route (Ln) by turn travel, the method comprising:
performing, by a first steering control module (61), steering control for first turn travel on the vehicle to cause the vehicle to leave the previous route (Ls) and head for the subsequent route (Ln);
calculating, by a virtual turning circle calculation module (67), a virtual turning circle (VC) to be used as a target route for second turn travel on the vehicle to cause the vehicle to enter the subsequent route (Ln);
calculating, by a tangent calculation module (68), a tangent extending from a vehicle body reference point (Pv) in the first turn travel to the virtual turning circle (VC) as a target route for shift travel on the vehicle to cause the vehicle to shift from the first turn travel to second turn travel;
performing, by a third steering control module (63), steering control for the shift travel; and
performing, by a second steering control module (62), steering control for the second turn travel,
wherein the tangent calculation module (68) is further to set the tangent calculated, at a reference tangent (RT) when an angle (θ) between the tangent and a traveling direction of the vehicle is within a first predetermined angle (θt), and
wherein the third steering control module (63) is further to perform the steering control with the reference tangent (RT) set at the target route for the shift travel.

9. A computer program product comprising computer-readable instructions that, when loaded and run on a computer connected to an agricultural vehicle, cause the computer to perform the method according to claim 8.

## Patentansprüche

1. Automatisches Lenksystem für ein landwirtschaftliches Fahrzeug mit einer Funktion zur Erfassung der aktuellen Position, wobei das automatische Lenksystem konfiguriert ist, das Fahrzeug zu veranlassen, durch Wendefahrt von einer vorherigen Route (Ls) zu einer nachfolgenden Route (Ln) zu wechseln, wobei das automatische Lenksystem umfasst:
ein erstes Lenksteuer- bzw. -regelmodul (61), das konfiguriert ist, eine Lenksteuerung bzw. -regelung für eine erste Wendefahrt an dem Fahrzeug durchzuführen, um das Fahrzeug zu veranlassen, die vorherige Route (Ls) zu verlassen und die nachfolgende Route (Ln) zu fahren;
ein zweites Lenksteuer- bzw. -regelmodul (62), das konfiguriert ist, eine Lenksteuerung bzw. -regelung für eine zweite Wendefahrt an dem Fahrzeug durchzuführen, um das Fahrzeug zu veranlassen, in die nachfolgende Route (Ln) einzutreten;
ein drittes Lenksteuer- bzw. -regelmodul (63), das konfiguriert ist, eine Lenksteuerung bzw. -regelung für den Schaltweg an dem Fahrzeug durchzuführen, um das Fahrzeug zu veranlassen, von der ersten Wendefahrt zu der zweiten Wendefahrt zu schalten;
**dadurch gekennzeichnet, dass** das automatische Lenksystem ferner umfasst:
ein Virtueller-Wendekreis-Berechnungsmodul (67), das konfiguriert ist, einen virtuellen Wendekreis (VC) zu berechnen, der als eine Zielroute für die zweite Wendefahrt zu verwenden ist; und
ein Tangentenberechnungsmodul (68), das konfiguriert ist, als Zielroute für die Wendefahrt eine Tangente zu berechnen, die sich von einem Fahrzeugkarosserie-Referenzpunkt (Pv) bei der ersten Wendefahrt zu dem virtuellen Wendekreis (VC) erstreckt, wobei
das Tangentenberechnungsmodul (68) ferner konfiguriert ist, die berechnete Tangente auf eine Referenztangente (RT) einzustellen, wenn ein Winkel (θ) zwischen der Tangente und einer Fahrtrichtung des Fahrzeugs innerhalb eines ersten vorbestimmten Winkels (θt) ist, und
das dritte Lenksteuer- bzw. -regelmodul (63) ferner konfiguriert ist, die Lenksteuerung bzw. -regelung mit der Referenztangente (RT) durchzuführen, die auf die Zielroute für den Schaltweg eingestellt ist.

2. Automatisches Lenksystem nach Anspruch 1, wobei
das Virtueller-Wendekreis-Berechnungsmodul (67) ferner konfiguriert ist, als Routenliniensegmente (CH) Sehnen zu definieren, die durch Teilen des virtuellen Wendekreises (VC) in eine Mehrzahl von Bögen erhalten werden, und
das zweite Lenksteuer- bzw. -regelmodul (62) konfiguriert ist, die Lenksteuerung bzw. -regelung durchzuführen, während nacheinander die Routenliniensegmente (CH) als Zielroute für die zweite Wendefahrt ausgewählt werden.

3. Automatische Lenksystem nach einem der Ansprüche 1 bis 2, ferner umfassend:
ein zusätzliches Lenksteuer- bzw. -regelmodul (60), das konfiguriert ist, eine Lenksteuerung bzw. -regelung durchzuführen, bei der die nachfolgende Route auf eine Zielroute eingestellt ist, wenn ein Winkel (α) zwischen einer Fahrtrichtung (RD) des Fahrzeugs und der nachfolgenden Route (Ln) innerhalb eines zweiten vorbestimmten Winkels (αt) ist und ein Abstand (D) zwischen dem Fahrzeugkarosserie-Referenzpunkt (Pv) und der nachfolgenden Route (Ln) gleich oder kleiner als ein vorbestimmter Abstand ist.

4. Automatisches Lenksystem nach einem der Ansprüche 1 bis 3, wobei
das erste Lenksteuer- bzw. -regelmodul (61) ferner konfiguriert ist, die Lenksteuerung bzw. -regelung für die erste Wendefahrt bei einem Minimumwenderadius des Fahrzeugs durchzuführen.

5. Automatisches Lenksystem nach einem der Ansprüche 1 bis 4, wobei
das automatische Lenksystem konfiguriert ist, das Fahrzeug dahingehend zu steuern bzw. zu regeln, dass es direkt von der ersten Wendefahrt zu der zweiten Wendefahrt schaltet bzw. wechselt, ohne der Lenksteuerung bzw. -regelung durch das dritte Lenksteuer- bzw. -regelmodul (63) unterworfen zu sein, wenn eine Länge einer ersten Tangente, die durch das Tangentenberechnungsmodul (68) berechnet wird, unter einen unteren Grenzwert fällt.

6. Automatisches Lenksystem nach einem der Ansprüche 1 bis 5, wobei
wenn das Fahrzeug von der nachfolgenden Route (Ln) oder einer Verlängerung von der nachfolgenden Route (Ln) über einen Grenzwert hinaus bei Beendigung der zweiten Wendefahrt abweicht, das automatische Lenksystem dahingehend konfiguriert ist, das Fahrzeug in den Rückwärtsgang zu bringen, um eine Annäherungsfahrt durchzuführen, die sich der nachfolgenden Route (Ln) nähert, und das Fahrzeug für die zweite Wendefahrt wieder der Lenksteuerung bzw. -regelung zu unterwerfen.

7. Landwirtschaftliches Fahrzeug, umfassend das automatische Lenksystem nach einem der Ansprüche 1 bis 6.

8. Automatisches Lenkverfahren für ein landwirtschaftliches Fahrzeug mit einer Funktion zur Erfassung der aktuellen Position, wobei das Verfahren das Fahrzeug veranlasst, durch Wendefahrt von einer vorherigen Route (Ls) zu einer nachfolgenden Route (Ln) zu wechseln, wobei das Verfahren umfasst:
Durchführen, durch ein erstes Lenksteuer- bzw. -regelmodul (61), einer Lenksteuerung bzw. -regelung für eine erste Wendefahrt an dem Fahrzeug, um das Fahrzeug zu veranlassen, die vorherige Route (Ls) zu verlassen und die nachfolgende Route (Ln) zu fahren;
Berechnen, durch ein Virtueller-Wendekreis-Berechnungsmodul (67), eines virtuellen Wendekreises (VC), der als eine Zielroute für eine zweite Wendefahrt an dem Fahrzeug zu verwenden ist, um das Fahrzeug zu veranlassen, in die nachfolgende Route (Ln) einzutreten;
Berechnen, durch ein Tangentenberechnungsmodul (68), einer Tangente, die sich von einem Fahrzeugkarosserie-Referenzpunkt (Pv) bei der ersten Wendefahrt zu dem virtuellen Wendekreis (VC) erstreckt, als eine Zielroute für den Schaltweg an dem Fahrzeug, um das Fahrzeug zu veranlassen, von der ersten Wendefahrt zu der zweiten Wendefahrt zu schalten bzw. zu wechseln;
Durchführen, durch ein drittes Lenksteuer- bzw. -regelmodul (63), einer Lenksteuerung bzw. -regelung für den Schaltweg; und
Durchführen, durch ein zweites Lenksteuer- bzw. -regelmodul (62), einer Lenksteuerung bzw. -regelung für die zweite Wendefahrt,
wobei das Tangentenberechnungsmodul (68) ferner zum Einstellen der berechneten Tangente auf eine Referenztangente (RT) dienst, wenn ein Winkel (θ) zwischen der Tangente und einer Fahrtrichtung des Fahrzeugs innerhalb eines ersten vorbestimmten Winkels (θt) ist, und
wobei das dritte Lenksteuer- bzw. -regelmodul (63) ferner zum Durchführen der Lenksteuerung bzw. -regelung dient, wobei die Referenztangente (RT) auf die Zielroute für den Schaltweg eingestellt ist.

9. Computerprogrammprodukt, umfassend computerlesbare Anweisungen, die auf einen Computer geladen und ausgeführt, der mit einem landwirtschaftlichen Fahrzeug verbunden ist, den Computer veranlassen, das Verfahren nach Anspruch 8 durchzuführen.

## Revendications

1. Système de direction automatique pour un véhicule agricole ayant une fonction de détection de position actuelle, le système de direction automatique étant configuré pour amener le véhicule à transférer d'un itinéraire précédent (Ls) à un itinéraire subséquent (Ln) par déplacement en virage, le système de direction automatique comprenant :
un premier module de commande de direction (61) configuré pour réaliser la commande de direction pour un premier déplacement en virage sur le véhicule pour amener le véhicule à quitter l'itinéraire précédent (Ls) et se diriger vers l'itinéraire subséquent (Ln) ;
un deuxième module de commande de direction (62) configuré pour réaliser la commande de direction pour un second déplacement en virage sur le véhicule pour amener le véhicule à entrer dans l'itinéraire subséquent (Ln) ;
un troisième module de commande de direction (63) configuré pour réaliser la commande de direction pour un déplacement en décalage sur le véhicule pour amener le véhicule à décaler du premier déplacement en virage au second déplacement en virage ;
**caractérisé en ce que** le système de direction automatique comprend en outre :
un module de calcul de cercle de rotation virtuel (67) configuré pour calculer un cercle de rotation virtuel (VC) devant être utilisé en tant qu'itinéraire cible pour le second déplacement en virage ; et
un module de calcul de tangente (68) configuré pour calculer, en tant qu'itinéraire cible pour le déplacement en décalage, une tangente d'un point de référence de carrosserie de véhicule (Pv) dans le premier déplacement en virage au cercle de rotation virtuel (VC), dans lequel
le module de calcul de tangente (68) est en outre configuré pour régler la tangente calculée sur une tangente de référence (RT) lorsqu'un angle (θ) entre la tangente et une direction de déplacement du véhicule est au sein d'un premier angle prédéterminé (θt), et
le troisième module de commande de direction (63) est en outre configuré pour réaliser la commande de direction avec la tangente de référence (RT) réglée sur l'itinéraire cible pour le déplacement en décalage.

2. Système de direction automatique selon la revendication 1, dans lequel le module de calcul de cercle de rotation virtuel (67) est en outre configuré pour définir, en tant que segments de ligne d'itinéraire (CH), des cordes obtenues en divisant le cercle de rotation virtuel (VC) en une pluralité d'arcs, et
le deuxième module de commande de direction (62) est configuré pour réaliser la commande de direction tout en sélectionnant successivement les segments de ligne d'itinéraire (CH) en tant qu'itinéraire cible pour le second déplacement en virage.

3. Système de direction automatique selon l'une quelconque des revendications 1 à 2, comprenant en outre :
un module de commande de direction supplémentaire (60) configuré pour réaliser la commande de direction avec l'itinéraire subséquent réglé sur un itinéraire cible lorsqu'un angle (α) entre une direction de déplacement (RD) du véhicule et l'itinéraire subséquent (Ln) est au sein d'un second angle prédéterminé (αt), et une distance (D) entre le point de référence de carrosserie de véhicule (Pv) et l'itinéraire subséquent (Ln) est inférieure ou égale à une distance prédéterminée.

4. Système de direction automatique selon l'une quelconque des revendications 1 à 3, dans lequel
le premier module de commande de direction (61) est en outre configuré pour réaliser la commande de direction pour le premier déplacement en virage à un rayon de braquage minimal du véhicule.

5. Système de direction automatique selon l'une quelconque des revendications 1 à 4, dans lequel
le système de direction automatique est configuré pour commander le véhicule de décaler directement du premier déplacement en virage au second déplacement en virage sans être soumis à la commande de direction par le troisième module de commande de direction (63) lorsqu'une longueur d'une première tangente calculée par le module de calcul de tangente (68) tombe en dessous d'une valeur limite inférieure.

6. Système de direction automatique selon l'une quelconque des revendications 1 à 5, dans lequel
lorsque le véhicule dévie de l'itinéraire subséquent (Ln) ou d'un prolongement de l'itinéraire subséquent (Ln) au-delà d'une valeur limite à la fin du second déplacement en virage, le système de direction automatique est configuré pour mettre le véhicule en marche arrière pour réaliser un déplacement d'approche approchant l'itinéraire subséquent (Ln) et pour soumettre de nouveau le véhicule à la commande de direction pour le second déplacement en virage.

7. Véhicule agricole comprenant le système de direction automatique selon l'une quelconque des revendications 1 à 6.

8. Procédé de direction automatique pour un véhicule agricole ayant une fonction de détection de position actuelle, le procédé amenant le véhicule à transférer d'un itinéraire précédent (Ls) à un itinéraire subséquent (Ln) par déplacement en virage, le procédé comprenant :
réaliser, par un premier module de commande de direction (61), la commande de direction pour un premier déplacement en virage sur le véhicule pour amener le véhicule à quitter l'itinéraire précédent (Ls) et se diriger vers l'itinéraire subséquent (Ln) ;
calculer, par un module de calcul de cercle de rotation virtuel (67), un cercle de rotation virtuel (VC) devant être utilisé en tant qu'itinéraire cible pour le second déplacement en virage sur le véhicule pour amener le véhicule à entrer dans l'itinéraire subséquent (Ln) ;
calculer, par un module de calcul de tangente (68), une tangente s'étendant d'un point de référence de carrosserie de véhicule (Pv) dans le premier déplacement en virage au cercle de rotation virtuel (VC) en tant qu'itinéraire cible pour le déplacement en décalage sur le véhicule pour amener le véhicule à décaler du premier déplacement en virage au second déplacement en virage ;
réaliser, par un troisième module de commande de direction (63), la commande de direction pour le déplacement en décalage ; et
réaliser, par un deuxième module de commande de direction (62), la commande de direction pour le second déplacement en virage,
dans lequel le module de calcul de tangente (68) doit en outre régler la tangente calculée sur une tangente de référence (RT) lorsqu'un angle (θ) entre la tangente et une direction de déplacement du véhicule est au sein d'un premier angle prédéterminé (θt), et
dans lequel le troisième module de commande de direction (63) doit en outre réaliser la commande de direction avec la tangente de référence (RT) réglée sur l'itinéraire cible pour le déplacement en décalage.

9. Produit de programme informatique comprenant des instructions lisibles par ordinateur qui, lors de leur chargement et exécution sur un ordinateur connecté à un véhicule agricole, amènent l'ordinateur à réaliser le procédé selon la revendication 8.
